# EUROPEAN PATENT SPECIFICATION

(11) **EP 0 278 033 B1**
(45) Date of publication and mention of the grant of the patent: **09.06.1993**
(21) Application number: 87101883.4
(22) Date of filing: 11.02.1987
(51) Int. Cl.: F02B 27/06

(54) **High performance exhaust system for internal combustion engine**
Hochleistungsauspuffanlage für Brennkraftmaschine
Système d'échappement à haute performance pour moteur à combustion interne

(43) Date of publication of application: 17.08.1988
(73) Proprietor: YAMAHA MOTOR CO., LTD., Iwata-shi Shinzuoka-ken 438 (JP)
(72) Inventor: Ueda, Hideaki, Iwata-shi Shinzuoka-ken (JP)
(74) Representative: Grünecker, Kinkeldey, Stockmair & Schwanhäusser Anwaltssozietät

(56) References cited:
- DE-C- 946 268
- DE-C- 946 930
- FR-A- 761 047
- US-A- 2 717 583
- US-A- 3 703 937
- PATENT ABSTRACTS OF JAPAN, vol. 11, no. 175 (M-596)[2622], 5th June 1987; & JP-A-62 7924 (HONDA MOTOR CO. LTD.) 14-01-1987

## Description

### BACKGROUND OF THE INVENTION

This invention relates to a high performance exhaust system for an internal combustion engine and more particularly to an exhaust system that permits a higher specific output and also which improves the output of the engine at mid-range and idle running conditions.

It is well known that the power output of an internal combustion engine, at any particular running condition, is determined by the amount of fuel/air charge that can be successfully inducted into the combustion chamber and completely burned during each cycle of the engine operation. Thus, the efficiency of the engine is directly related to its charging efficiency. A wide variety of devices have been employed for improving the charging efficiency of an internal combustion engine. Such devices include multiple intake and exhaust valves, turbo-charging, and/or the use of considerable overlap between the opening of the intake valve and the closing of the exhaust valve. High performance engines normally include either valve or port timing (depending on whether they are four or two-cycle type) that have considerable overlap to achieve high power output.

Although such overlapping valve or port timing is very effective to improve the high performance output of an internal combustion engine, such an arrangement for increasing the power output significantly reduces the performance at mid-range conditions. The reason for this is that there will exist at the exhaust port of the engine a high pressure during a stage of the engine operation when the intake valve is also opened. Therefore, rather than drawing a fresh fuel/air charge into the combustion chamber through the intake port, the exhaust gases tend to flow back into the combuston chamber through the exhaust port. This not only dilutes the fresh fuel/air charge in the combustion chamber but it also precludes the introduction of a complete fuel/air charge. As a result, many high performance engines employing large degrees of valve overlap have extremely poor mid-range or low speed runing characteristics. This manifests itself in the torque curve of the engine wherein, although maximum power output is achieved, the torque output of the engine at mid-range and low speeds is considerably poorer than a more convention engine having less valve overlap or port timing overlap.

JP-A-62 7924 discloses an internal combustion engine having a combustion chamber, an exhaust port for discharging exhaust gases from said combustion chamber, an exhaust pipe extending from said exhaust port for conveying exhaust gases therefrom, and an expansion chamber into which said exhaust pipe discharges. A shielding member, operated by an actuator, is provided on an end portion, where the exhaust pipe opens into the expansion chamber. The shielding member is opened when the engine runs with high speed and is partly closed in the middle-range speed.

US-A-2,717,583 describes means for adjusting the flow area of an exhaust conduit of an internal combustion engine in accordance with an operating condition of the engine. It is disclosed to use a throttle valve in the form of a flap valve or a shutter having an adjustable orifice.

The present invention has the object to provide an internal combustion engine having a plurality of combustion chambers wherein the power output of the engine may be improved at all running conditions, that is, by high speed, mid-range speed and low-range speed.

### SUMMARY OF THE INVENTION

The object is solved by an internal combustion engine according to claim 1.

Preferred embodiments of the invention are subject matter of the subclaims.

### BRIEF DESCRIPTION OF THE DRAWINGS

Figure 1 is a side elevational view of a motorcycle, shown partially in phantom, having an internal combustion engine constructed in accordance with an embodiment of the invention.

Figure 2 is an enlarged top plan view showing the exhaust system for the engine.

Figure 3 is an enlarged cross-section view taken along the line 3-3 of Figure 2.

Figure 4 is a cross-sectional view taken along the line 4-4 of Figure 3.

Figure 5 is a pair of curves showing the pressure at the exhaust port of an engine of the conventional type of an engine constructed in accordance with an embodiment of this invention, under one running condition.

Figure 6 is a torque curve showing a conventional engine and an engine constructed in accordance with an embodiment of the invention.

Figure 7 is a graphical view showing how the positive pressures occur at the exhaust port with conventional engines.

Figure 8 is a graphical view showing how the reflective valve of an embodiment of the invention may be operated in order to practice the invention.

Figure 9 is a view in part similar to Figure 8 showing another arrangement by which the reflective valve may be operated.

### DETAILED DESCRIPTION OF THE PREFERRED EMBODIMENTS

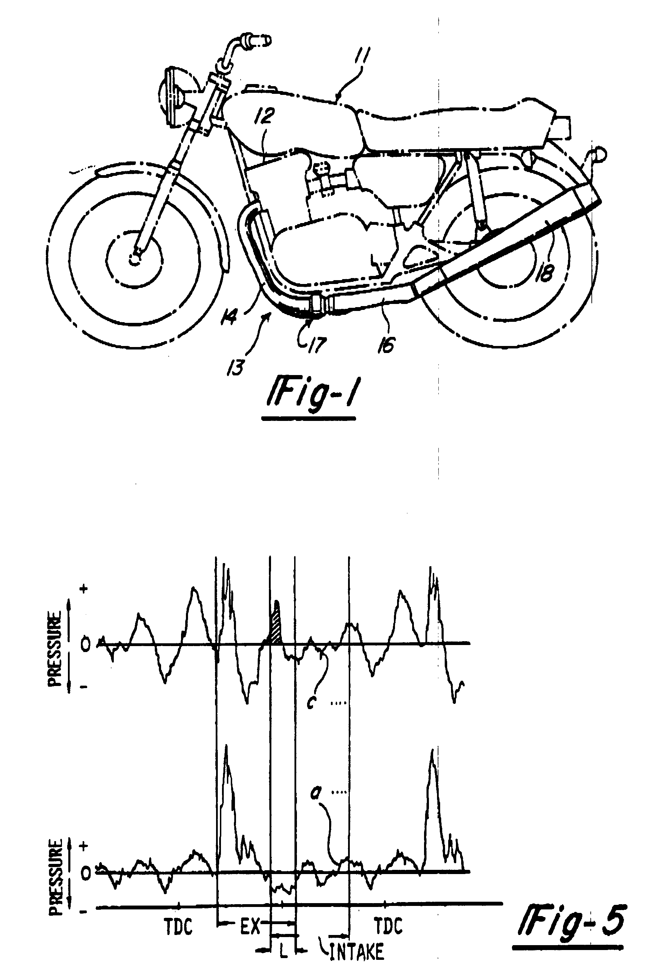

Referring now in detail to the drawings and particularly to Figures 1 and 2, a motorcycle powered by an internal combustion engine constructed in accordance with an embodiment of the invention is shown partially in phantom and is identified generally by the reference numeral 11. The motorcycle 11 includes a powering internal combustion engine 12 which, in the illustrated embodiment, is depicted as being of the four cylinder, inline type. The engine 12, in the illustrated embodiment, is of the four-cycle type, however, it is to be understood that the invention may be practiced with engines operating on the two-stroke cycle, and on engines having differing numbers of cylinders and different cylinder arrangements. Also, the invention is susceptible of use in other than reciprocating engines. However, the invention has utility in engines of the type wherein there is a substantial overlap between the closing of the exhaust valve and the opening of the intake valve or, in the case of a two-cycle engine, the closing of the exhaust port and the opening of the intake port. Also, the invention can be practiced with single cylinder engines but has particularly utility in multiple cylinder engines.

Since the invention deals with the exhaust system for the engine, the details of the engine have not been illustrated. It is to be understood, however, that the engine has an intake port and an exhaust port which are controlled either by valves, piston movement or the like, depending upon whether the engine is of the two or four-cycle type and that there is a substantial overlap between the opening of the intake valve and the closing of the exhaust valve as will be described.

The engine 12 is provided with an exhaust system, indicated generally by the reference numeral 13, and which is constructed in accordance with an embodiment of the invention. The exhaust system 13 includes a plurality of individual exhaust pipes 14 that are flanged as at 15 at their inlet ends for cooperation with the cylinder head of the engine 12 so as to place the exhaust pipes 14 in communication at their inlet ends with the exhaust ports of the engine 12. At their outlet ends, the exhaust pipes 14 discharge into an expansion chamber 16 through a valve assembly, indicated generally by the refernce numeral 17 and constructed in accordance with an embodiment of the invention. The exhaust gases are delivered from the expansion chamber 16 to the atmosphere through a pair of combined muffler and tailpipes 18 which lie on opposite sides of the rear wheel of the motorcycle.

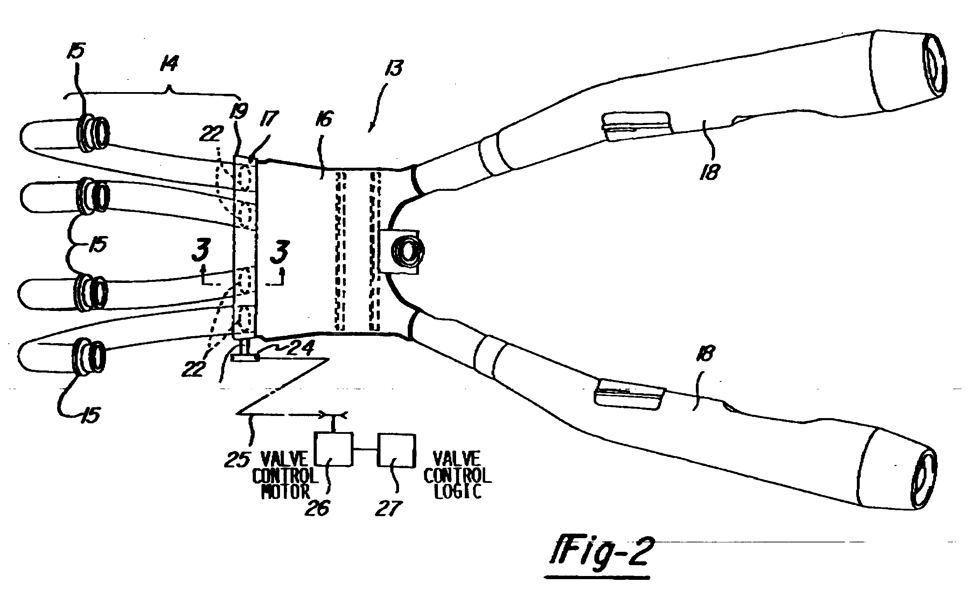

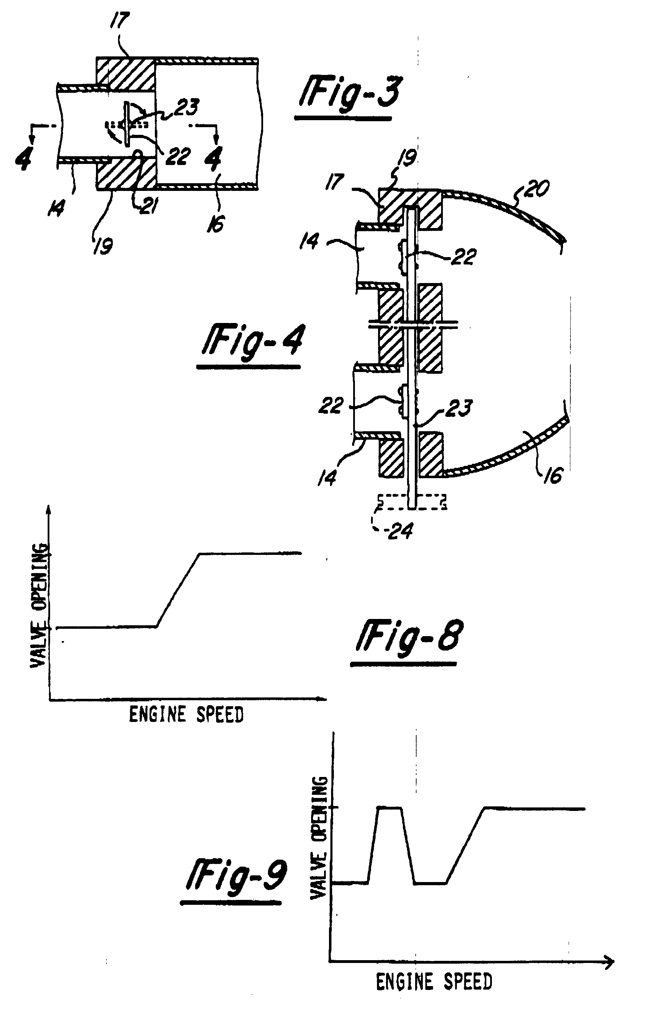

Except for the valve mechanism 17 and the way it is operated, which will be described, the engine 12 and its exhaust system 13 may be considered to be conventional. The engine 12 is designed to be of the high output type and has a substantial overlap in its valve timing. As a result, the engine 12, with its exhaust system 13 and without considering the operation of the valve mechanism 17, will product a torque curve as shown in Figure 6. The torque curve of a convention engine of this type is shown by the curve c. As may be seen, at the higher output conditions A, the torque curve is extremely good and provides a high power. However, at the intermediate ranges (C), the torque curve falls off rather badly and these are the normal cruising speeds of the engine. Also, at the idle condition and low speed (B), the torque is also not good and poor running results.

The reason for this may be understood best by reference to Figure 5 wherein the pressure at the exhaust port in accordance with a convention engine is shown by the curve c. This is a pressure trace of the instantaneous pressure at the exhaust port during a cycle of operation at a running condition which is in the mid-range and specifically at a point indicated as the point X in Figure 6. As may be seen, when the exhaust port initially opens, there are high pressure conditions which exist and then this pressure falls off as the exhaust gases become discharged to the atmosphere. However, at the time when the intake valve opens and the exhaust port is still open, as indicated by the overlap area L, the pressure at the exhaust port with the convention type of engine again becomes positive. As a result, the exhaust gases will tend to flow back into the combustion chamber rather than the chamber being filled with a fresh intake fuel/air charge through the intake port. Hence, there will be dilution of the intake charge and the volumetric efficiency falls off. This is the reason for the poor mid-range and low speed torque curve as shown in Figure 6.

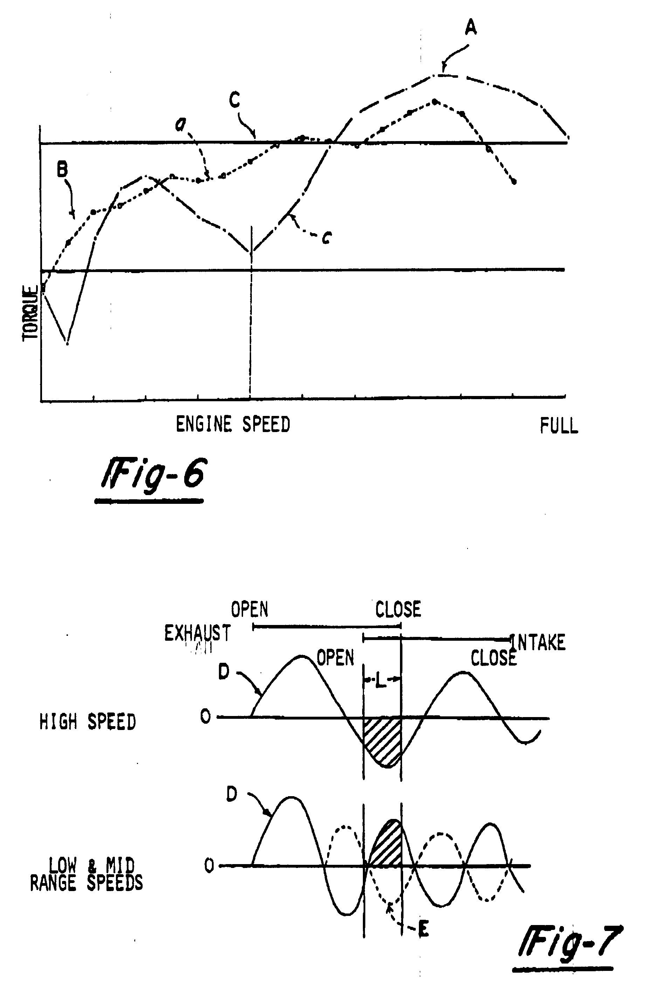

It will be noted that this condition exists only at the lower speed ranges and the reason for this may be understood by reference to Figure 7. In this figure, the pressure is shown in relation to the valve timing at both high speed and at the low, mid-range conditions. It will be seen that at high speed, the pressure wave is such that during the overlap period, there is a negative pressure which improves both the exhausting of the exhaust gases from the combustion chamber and the intake of fresh air charge. However, at low and mid-ranges, the opposite condition prevails and there is a positive pressure during the overlap period that has the deleterious effects aforenoted.

In accordance with the invention, the valve mechanism 17 is employed for preventing the existence of such positive pressures at the exhaust port during the overlap period and under predetermined running conditions.

Referring now specifically to Figures 2 through 4, the valve assembly 17 includes a valve body 19 that has a plurality of passages 21 that cooperate with the exhaust pipe outlets 14 to deliver exhaust gases to a collector section 20 that discharges into the expansion chamber 16. In each of the passages 21, there is provided a control valve 22 which acts as a reflective device under certain conditions, as to be described, for controlling the pressure at the exhaust ports of the engine.

The control valves 22 are all affixed to a common control valve shaft 23 that is journaled in a suitable manner in the valve body 19. At one end of the shaft 23, there is provided a control pulley 24 around which is wound a flexible transmitter 25. The transmitter 25 is, in turn, operated by means of a control motor 26 that may be of any known type motor such as a vacuum motor, electric motor, electric solenoid or the like. The control motor 26 is, in turn, operated by means of a logic device 27 that controls the position of the valves 22 in response to preset conditions. These preset conditions may be either engine speed, carburetor throttle valve position, boost pressure (in the event the engine is super-charged), engine load, or any other type of arrangement for providing the necessary control signal in response to the running condition.

In a preferred embodiment of the invention, the cross-sectional area of the reflective control valve 22 is such that when they are fully closed, as shown in the solid line view of Figure 3, that they will obstruct approximately one-half of the effective cross-sectional area of the exhaust pipes 14. In certain embodiments, this ratio has been found to give a good overall effect although different relations may be used with other engines. Also, even though butterfly type valves 22 are used in the illustrated embodiment, other type of valves or reflective devices may be used.

As has been previously noted and as will become apparent from reviewing Figure 6, the torque curve c demands some control during the ranges B and C in order to improve the performance. In the simplest embodiment, it is possible to close the control valves 22 in accordance with a curve as shown in Figure 8. In this case, the valves 22 are maintained fully closed until the engine speed reaches a predetermined speed, such as at the point X and then the valves gradually are opened until they reach their fully opened position at the approximate upper end of the mid-range curve.

The curve a in Figure 6 shows the effect of the closing of the valves 22. The curve a is generated by keeping the valves 22 in their fully closed position throughout the entire engine speed and load ranges. It will be seen that there is a significant improvement in torque during the ranges B and C and that the torque then falls off from the maximum torque curve during the high speed range A. Thus, if the valves 22 are maintained closed up until the transition between the point C and E, a torque curve will result which is the torque curve a up until this point and then the torque curve becomes the curve c. Therefore, it should be readily apparent that this device is effective in significantly improving the torque at mid-range running.

This effect may also be seen in the pressure curve of Figure 5 wherein the curve a indicates the pressure at the exhaust port in the condition at point X of the speed curve and with the valves 22 in their fully closed position (one-half of the area of the exhaust pipes 14 closed). By comparing the curves a and c, it may be seen that during the overlap period L, that there are no positive pressures at the exhaust port and this is why the torque curve is significantly improved.

This may also be understood by Figure 7 wherein the curve E shows the effect of the valve and the fact that it reduces the positive pressure occurrence at the exhaust port during the overlap period.

It may be seen that the conventional engine torque curve c has better performance at certain speeds between idle and half engine speed and thus, the performance can still further be improved by controlling the valve 22 so that they fully open under this condition and then again close as shown in Figure 9. Of course, the actual tuning of the operation and closure of the valves 22 may be readily determined by those skilled in the art in order to achieve maximum performance for a given engine.

## Claims

1. An internal combustion engine having a plurality of combustion chambers, a plurality of exhaust pipes (14) for discharging exhaust gases from said combustion chambers, a common expansion chamber into which said exhaust pipes discharge and which is located upstream of a muffler (18), wherein adjustable reflective means (22) are positioned contiguous to the ends of said exhaust pipes (14) which discharge in said common expansion chamber, said plurality of adjustable reflective means (22) have a common rotatable shaft axis (23) which is arranged along a plane of a plurality of justaposed exhaust pipes (14), wherein said reflective means (22) close approximately one half of the effective cross sectional area of each of the exhaust pipes (14) in response to preset engine conditions, a control pulley (24) being provided at the end of said common rotatable shaft axis (23) said controlled pulley (24) being provided with a flexible transmitter (25) which is wound around said pulley (24), said flexible transmitter (25) is operatable by means of a control motor (26).

2. An internal combustion engine as set forth in claim 1 wherein the engine condition comprises engine speed.

3. An internal combustion engine as set forth in claim 2 wherein the variable reflective area is increased when the engine speed is below a predetermined speed.

4. An internal combustion engine as set forth in claim 3 wherein the reflective area is increased at idle and during mid-range running.

5. An internal combustion engine as set forth in claim 4 wherein the reflective means comprises a valve.

6. An internal combustion engine as set forth in claim 3 wherein the reflective area is decreased during at least a portion of the idle and mid-range running.

## Patentansprüche

1. Verbrennungskraftmaschine mit innerer Verbrennung, mit einer Vielzahl von Brennkammern, einer Vielzahl von Auspuffrohren (14), um die Auspuffgase aus diesen Brennkammern auszubringen, einer gemeinsamen Ausdehnungskammer, in welche diese Auspuffrohre die Auspuffgase ausbringen, und welche stromaufwärts von einem Schalldämpfer (18) angeordnet ist, wobei einstellbare Reflexionseinrichtungen (22) zusammenpassend mit den Enden dieser Auspuffrohre (14) angeordnet sind, welche die Auspuffgase in diese gemeinsame Ausdehnungskammer ausbringen, wobei diese Vielzahl von einstellbaren Reflexionseinrichtungen (22) eine gemeinsame Achswelle (23) aufweisen, welche entlang einer Ebene einer Vielzahl von benachbarten Auspuffrohren (14) angeordnet ist, wobei diese Reflexionseinrichtungen (22) ungefähr eine Hälfte der effektiven Querschnittsfläche von jedem dieser Auspuffrohre (14) in Relation auf vorbestimmte Motor-Betriebsbedingungen schließen, ein Steuertreibrad (24), welches an dem Ende dieser gemeinsamen drehbaren Achswelle (23) angeordnet ist, wobei dieses gesteuerte Treibrad (24) mit einem flexiblen Übertragungselement (25) versehen ist, welches um dieses Treibrad (24) geschlungen ist, und wobei diese flexible Übertragungseinrichtung (25) mittels eines Steuermotors (26) betätigbar ist.

2. Verbrennungskraftmaschine gemäß Anspruch 1, wobei diese Betriebsbedingung des Motors die Motordrehzahl beinhaltet.

3. Verbrennungskraftmaschine gemäß Anspruch 2, wobei diese variable Reflexionsfläche erhöht wird, wenn die Motordrehzahl unterhalb einem vorbestimmten Wert ist.

4. Verbrennungskraftmaschine gemäß Anspruch 3, wobei diese Reflexionsfläche erhöht wird, während des Leerlaufes und während des Betriebes mit mittlerer Drehzahl.

5. Verbrennungskraftmaschine gemäß Anspruch 4, wobei diese Reflexionseinrichtung ein Ventil aufweist.

6. Verbrennungskraftmaschine gemäß Anspruch 3, wobei diese Reflexionsfläche zumindest in einem Bereich des Leerlaufes und des Laufes mit mittlerer Drehzahl erhöht wird.

## Revendications

1. Un moteur à combustion interne comportant une pluralité de chambres de combustion, une pluralité de tuyaux d'échappement (14) destinés à évacuer les gaz d'échappement hors desdites chambres de combustion, une chambre de détente commune dans laquelle débouchent lesdits tuyaux d'échappement et qui est située en amont d'un pot d'échappement (18), des moyens réflecteurs (22) réglables étant mis en place à proximité des extrémités desdits tuyaux d'échappement (14) qui débouchent dans ladite chambre de détente commune, ladite pluralité de moyens réflecteurs réglables (22) comportant un axe (23) formant un arbre rotatif commun qui est disposé sur le plan d'une pluralité de tuyaux d'échappement (14) juxtaposés, lesdits moyens réflecteurs (22) obstruant approximativement la moitié de la surface de section transversale efficace de chacun des tuyaux d'échappement (14) en réponse à l'apparition de conditions de fonctionnement du moteur déterminées à l'avance, une poulie de commande (24) étant montée à l'extrémité dudit axe (23) formant un arbre rotatif, ladite poulie commandée (24) étant munie d'un élément de transmission souple (25) qui est enroulé autour de ladite poulie (24), ledit élément de transmission souple (25) pouvant être actionné au moyen d'un moteur de commande (26).

2. Un moteur à combustion interne selon la revendication 1, dans lequel la condition de fonctionnement du moteur est la vitesse du moteur.

3. Un moteur à combustion interne selon la revendication 2, dans lequel la surface de réflexion variable est augmentée lorsque la vitesse du moteur est inférieure à une vitesse prédéterminée.

4. Un moteur à combustion interne selon la revendication 3, dans lequel la surface de réflexion est augmentée lors de la marche au ralenti et lors de la marche aux vitesses intermédiaires.

5. Un moteur à combustion interne selon la revendication 4, dans lequel le moyen réflecteur est constitué par une valve.

6. Un moteur à combustion interne selon la revendication 3, dans lequel la surface de réflexion est diminuée pendant au moins une partie de la marche au ralenti et à vitesse intermédiaire.
